# EUROPÄISCHE PATENTANMELDUNG

(11) **EP 0 935 325 A1**
(43) Veröffentlichungstag der Anmeldung: **11.08.1999**
(21) Anmeldenummer: 99810017.6
(22) Anmeldetag: 13.01.1999
(51) Int. Cl.: H02B 5/06

(54) **Gasisolierte metallgekapselte Schaltanlage**

(30) Priorität: 06.02.1998 DE 19805705
(71) Anmelder: Asea Brown Boveri AG, 5401 Baden (CH)
(72) Erfinder: Bucher, Daniel, 8620 Wetzikon (CH); Müller, Lorenz, Dr., 5412 Gebenstorf (CH)
(74) Vertreter: Kaiser, Helmut

(57) **Zusammenfassung**

Die gasisolierte metallgekapselte Schaltanlage enthält zwei, drei oder mehr Schalffelder mit jeweils einem mehrpoligen Leistungsschalter (CB₁, CB₂, CB₃, CB₄) sowie pro Schalterpol (CB_{1R}) Trenn- und Erdungsschalter und ist nach Art eines Ringes oder in einer 1 1/2 - Leistungsschalter - Schaltung aufgebaut. Die Schalterpole der Leistungsschalter sind jeweils gleichartig ausgebildet und parallel zueinander angeordnet. Die Schalffelder weisen pro Phase in einer vertikalen Ebene angeordnet jeweils einen U-förmig ausgebildeten Strompfad auf, bei dem die Basis des U einen vertikal ausgerichteten Pol des Leistungsschalters enthält und die beiden Schenkel des U jeweils einen Stromanschluss des Leistungsschalters und einen Trenn- sowie einen Erdungsschalter enthalten. Die oberen Schenkel der U eines der Schalffelder sind phasenweise verbunden mit den unteren Schenkeln (Sᵤ) eines anderen der Schaltfelder jeweils mittels einer gegenüber der Vertikalen geneigt angeordneten, geradlinig ausgeführten einphasigen Rohrgasleitung (L₁₂(R), L₂₃(R), L₃₄(S))· Eine solche Anlage zeichnet sich durch einen kompakten Aufbau aus.

## Beschreibung

### TECHNISCHES GEBIET

Bei der Erfindung wird ausgegangen von einer gasisolierten metallgekapselten Schaltanlage nach den Oberbegriffen der Patentansprüche 1 und 4.

### STAND DER TECHNIK

Schaltanlagen der vorgenannten Art sind beispielsweise in Brown Boveri Mitt. 11-79, S.700 bis 709 beschrieben. Bei einer dieser Schaltanlagen sind Leistungsschalter, Trenn- und Erdungsschalter, Stromwandler sowie Abgänge in Längsrichtung einer Ringsammelschiene in die Anlage eingebaut. Eine solche Anlage zeichnet sich durch eine gute Zugänglichkeit und Übersichtlichkeit aus, benötigt jedoch verhältnismässig viel Platz. Entsprechendes gilt für eine in der vorgenannten Veröffentlichung beschriebene gasisolierte, metallgekapselte Schaltanlage in 1 1/3- Leistungsschalter - Schaltung. Bei dieser Anlage sind 4 Leistungsschalter sowie Trenn- und Erdungsschalter, Stromwandler und drei Abgänge zwischen zwei Sammelschienen angeordnet. Der Abstand der beiden Sammelschienen ist jedoch beträchtlich, so dass diese Anlage verhältnismässig viel Platz benötigt.

### KURZE DARSTELLUNG DER ERFINDUNG

Der Erfindung, wie sie in den Patentansprüchen angegeben ist, liegt die Aufgabe zugrunde, gasisolierte metallgekapselte Schaltanlagen der eingangs genannten Art zu schaffen, welche äusserst kompakt ausgebildet sind und zugleich in besonders kostengünstiger Weise hergestellt werden können.

Die Schaltanlagen nach der Erfindung zeichnen sich durch einen geringen Platzbedarf aus. Durch geeignete Ausbildung, Anordnung und Verbindung der Schalffelder enffallen beim Stand der Technik verwendete und der Aufnahme der Abgänge dienende Brückenfelder zwischen den einzelnen Schalffeldern. Zugleich können die Schalterpole der Leistungsschalter und der überwiegende Teil der als einphasige Rohrgasleitungen ausgeführten Verbindungen gleichartig ausgebildet werden, wodurch die Herstellkosten der Anlagenkomponenten reduziert und die Montagekosten der Anlagen herabgesetzt werden können. Darüber hinaus können diese Anlagen kostengünstiig und ohne grossen zusätzlichen Aufwand erweitert werden. Gegebenenfalls in den Anlage verwendete Strom- und/oder Spannungswandler konventioneller Bauart können problemlos durch kompakte, wenig Raum beanspruchende Sensoren, beispielsweise Rogowskispulen oder optische, vorzugsweise faseroptische, Bauelemente ersetzt und hierbei in vorteilhafter Weise die Baubreite der Anlagen bzw. von die Anlagen aufnehmenden Gehäusen ganz wesentlich reduziert werden.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Draufsicht auf ein Layout einer ersten Ausführungsform einer gasisolierten metallgekapselten Schaltanlage nach der Erfindung mit vier als Ring geschalteten Schalffeldern,
- Fig.2: eine perspektivische Ansicht einer ersten Ausführungsform der hardwaremässig ausgeführten Schaltanlage nach Fig.1,
- Fig.3: eine Draufsicht auf die Schaltanlage nach Fig.2,
- Fig.4: eine Frontansicht der Schaltanlage nach Fig. 2,
- Fig.5: einen längs V - V (Fig.1) geführten Schnitt durch die Schaltanlage nach den Figuren 2 bis 4,
- Fig.6: einen längs VI - VI (Fig.1) geführten Schnitt durch die Schaltanlage nach den Figuren 2 bis 4,
- Fig.7: eine perspektivische Ansicht einer zweiten Ausführungsform der hardwaremässig ausgeführten Schaltanlage nach Fig.1,
- Fig.8: eine Draufsicht auf die Schaltanlage nach Fig.7,
- Fig.9: eine perspektivische Ansicht einer dritten Ausführungsform einer gasisolierten metallgekapselten Schaltanlage nach der Erfindung mit vier als Ring geschalteten Schalffeldern,
- Fig.10: eine Rückansicht der Schaltanlage nach Fig.9,
- Fig.11: eine Draufsicht auf ein Layout einer vierten Ausführungsform einer gasisolierten metallgekapselten Schaltanlage nach der Erfindung, welche in 1 1/2 - Leistungsschalter - Schaltung ausgeführt ist,
- Fig.12: einen längs XII - XII geführten Schnitt durch die Schaltanlage nach Fig.11,
- Fig.13: einen längs XIII - XIII geführten Schnitt durch die Schaltanlage nach Fig.11, und
- Fig.14: einen längs XIV - XIV geführten Schnitt durch die Schaltanlage nach Fig.11.

### WEG ZUR AUSFÜHRUNG DER ERFINDUNG

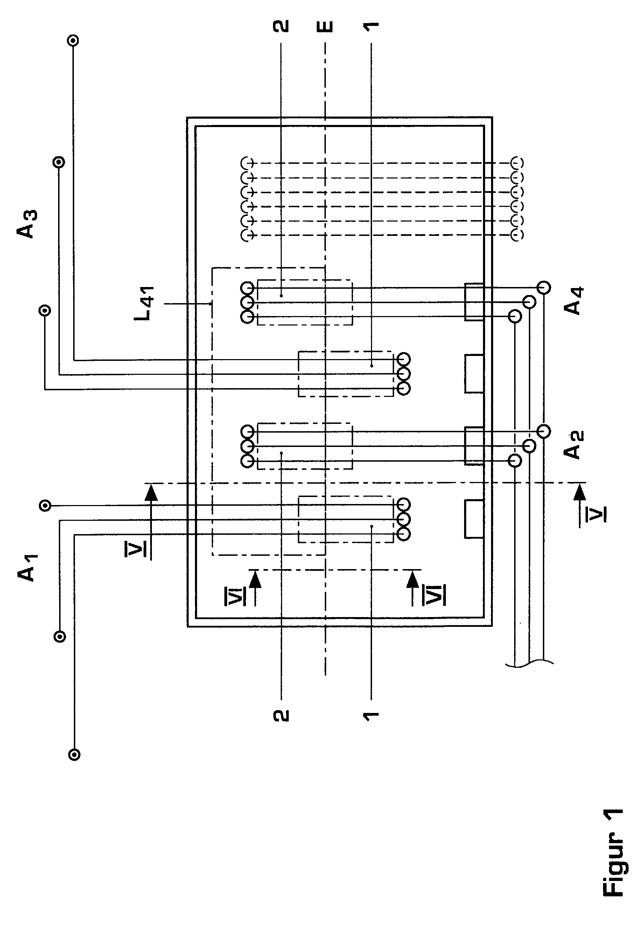

Die als Layout in Fig.1 dargestellte Schaltanlage weist vier nebeneinander angeordnete gleichartig ausgebildete Schalffelder 1, 2, 3 und 4 auf, welche jeweils mit einem Abgang A₁, A₂, A₃ und A₄ verbunden sind. Die Schalffelder 2 und 4 sind gegenüber den Schalffeldern 1 und 3 an einer Ebene E gespiegelt angeordnet. Die Schalffelder 1 und 2 bzw. 2 und 3 bzw. 3 und 4 sind jeweils durch in der Ebene E geführte, nicht bezeichnete Leitungen miteinander verbunden. Die Schalffelder 4 und 1 sind durch eine die Schalffelder zu einem Ring zusammenschaltende Stromverbindungen L₄₁ miteinander verbunden.

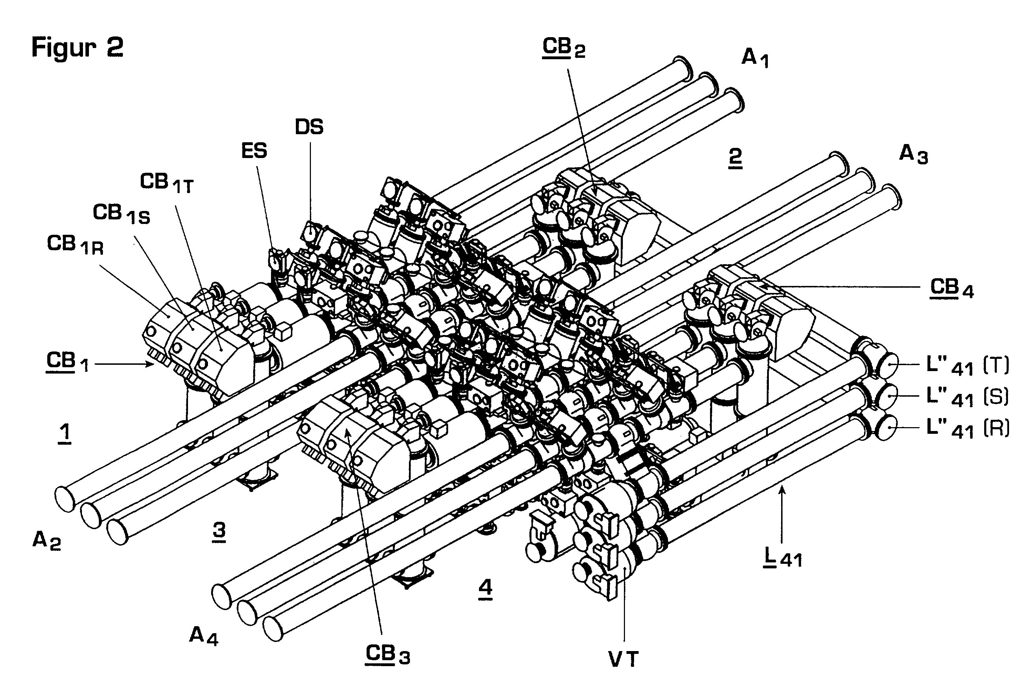

Aus den Figuren 2 bis 6 ist ersichtlich, wie diese Schaltanlege hardwaremässig ausgebildet ist. Jedes Schalffeld 1, 2, 3, 4 enthält einen Leistungsschalter CB₁, CB₂, CB₃ und CB₄ mit Schalterpolen CB_{iR}, CB_{iS} und CB_{iT}, wobei i = 1, 2, 3 und 4. Aus Gründen der Übersichtlichkeit sind nur die Pole des Leistungsschalters CB₁ bezeichnet. Jeder Schalterpol, z.B. CB_{1R,} steht in elektrisch leitender Verbindung mit mindestens einem Stromwandler CT, mindestens einem Trennschalter DS und mindestens einem Erdungsschalter ES. Femer ist pro Schalffeld mindestens ein Spannungswandler VT vorgesehen, welcher je nach Betriebsanforderungen auch enffallen kann.

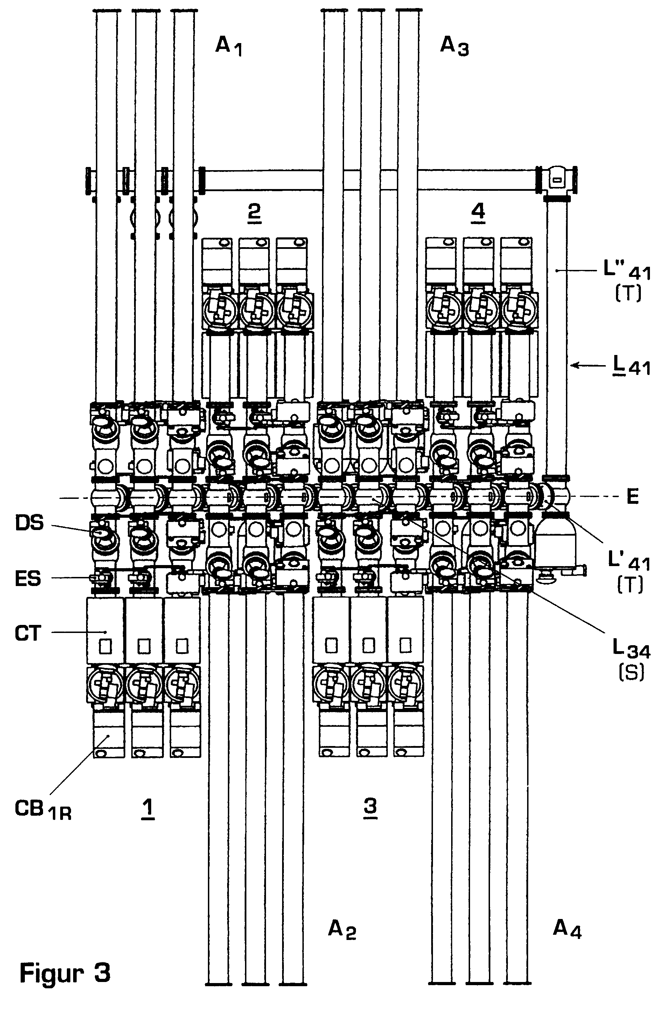

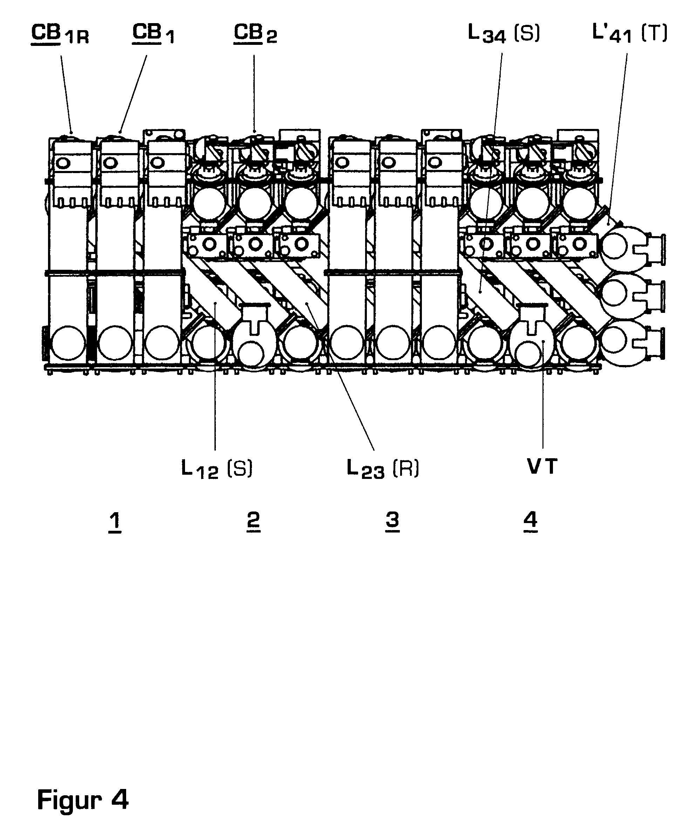

In Fig.3 ist die Ebene E eingetragen. Die Schalffelder 2 und 4 sind ersichtlich gegenüber den Schalffelder 1 und 3 an dieser Ebene gespiegelt angeordnet. Die Anlage kann nun problemlos an die antiparallel zu den Abgängen A₁ und A₃ geführten Abgänge A₂ und A₄ angeschlossen werden. In der Ebene E sind jeweils als einphasige Rohrgasleitung Lᵢⱼ (K), mit i, j = 1, 2, 3, 4 und K = R, S, T, ausgeführte Stromverbindungen zwischen den Schalffeldern 1 und 2, 2 und 3, 3 und 4 sowie 4 und 1 dargestellt. Aus Gründen der Übersichtlichkeit sind nur einige der Stromverbindungen bezeichnet, beispielsweise die Stromverbindungen L₃₄(S) der Phase S zwischen den Schalffeldem 3 und 4 und die Stromverbindungen L₄₁(T) der Phase T zwischen den Schalffeldern 4 und 1. Der überwiegende Teil der Stromverbindungen Lᵢⱼ(K) ist in der Ebene E angeordnet und jeweils mittels eines gegenüber der Vertikalen geneigt angeordneten, geradlinig ausgeführten Abschnitts einer einphasigen Rohrgasleitung realisiert. Diese Stromverbindungen sind parallel zueinander ausgerichtet. Die drei Stromverbindungen L₄₁(K), K = R, S, T weisen jeweils einen in der Ebene E geführten geneigten Abschnitt, z.B. L₄₁(T)', auf (Fig.4) sowie einen überwiegend horizontal geführten und mehrfach rechteckig gewinkelten Abschnitt, z.B. L₄₁(T)" (Fig.3), welcher an den Abschnitt L₄₁(T)' anschliesst und die elektrische Verbindung zur Phase T des Schalffeldes 1 herstellt. Die Abschnitte L₄₁(K)" der einzelnen Phasen der Stromverbindung L₄₁ sind vertikal übereinander angeordnet. Die den Phasen R, S und T zugeordneten Abschnitte L₄₁(K)' weisen unterschiedliche Längen auf und sind zumindest bei den Phasen S und T kürzer als die anderen Stromverbindungen Lᵢⱼ(K) (Fig.4).

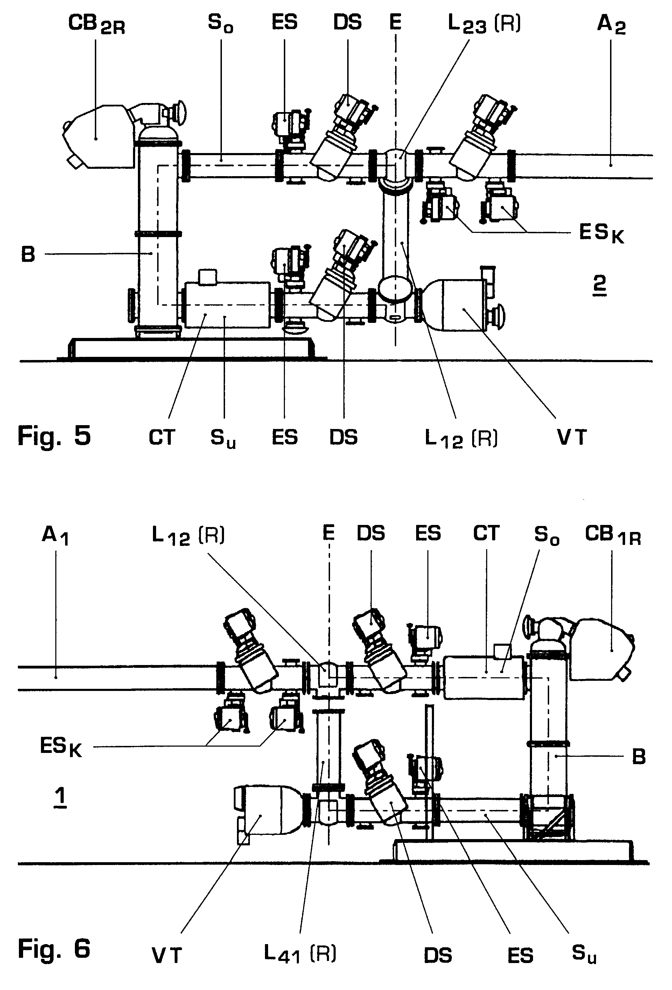

Die Schalterpole der Leistungsschalter sind im wesentlichen jeweils gleichartig ausgebildet und sind in parallel zueinander erstreckten Ebenen angeordnet. Aus aus den Figuren 5 und 6 sind stellvertretend für alle anderen Schalterpole die Schalterpole CB_{2R} und CB_{1R} ersichtlich. Jeder Schalterpol ist Bestandteil eines der Schalffelder. Ersichtlich weisen die Schalffelder pro Phase in einer vertikalen Ebene angeordnet jeweils einen U-förmig ausgebildeten Strompfad auf. Die Basis B des U befindet sich im vertikal ausgerichteten Schalterpol CB_{2R} (Fig.5) bzw. CB_{1R} (Fig.6) des Leistungsschalters CB₂ bzw. CB₁, wohingegen die beiden Schenkel Sₒ und Sᵤ des U jeweils einen Stromanschluss des Leistungsschalters, einen Trenn- DS und einen Erdungsschalter ES enthalten. Im unteren Schenkel Sᵤ des U ist beim Schalterpol CB_{2R} noch ein Stromwandler CT angeordnet, wohingegen beim gespiegelten Schalterpol CB_{1R} ein Stromwandler CT in oberen Schenkel Sₒ angeordnet ist. Aus den Figuren ist ferner ersichtlich, dass in der Ebene E an jedem der Schenkel Sₒ und Sᵤ eine der Stromverbindungen Lᵢⱼ(K) befestigt ist.

Bei Fig.5 sind dies die Stromverbindungen L₂₃(R) vom oberen Schenkel Sₒ des den Schalterpol CB_{2R} enthaltenden Strompfades zum unteren Schenkel Sᵤ des den Schalterpol CB_{3R} enthaltenden Strompfades sowie vom unteren Schenkel Sᵤ des den Schalterpol CB_{2R} enthaltenden Strompfades zum oberen Schenkel Sₒ des den Schalterpol CB_{1R} enthaltenden Strompfades.

Bei Fig.6 sind dies die vorgenannte Stromverbindung L₁₂(R) vom oberen Schenkel Sₒ des den Schalterpol CB_{1R} enthaltenden Strompfades zum unteren Schenkel Sᵤ des den Schalterpol CB_{2R} enthaltenden Strompfades sowie die Stromverbindungen L₄₁(R) vom Schalffeld 4 zum unteren Schenkel Sᵤ des den Schalterpol CB_{1R} enthaltenden Strompfades.

Die geneigt angeordneten Rohrgasleitungen Lᵢⱼ(K) haben im allgemeinen eine Neigung von ca. 45°. Es wird dann mit Sicherheit eine äusserst kompakte Anlage erreicht. Auch mit einem Neigungswinkel von ca. 30° bis 60° gegenüber der Vertikalen lassen sich noch sehr platzsparend ausgebildete Anlagen erreichen. Bei diesen Anlagen setzen sich die oberen Schenkel Sₒ der U in einem Abgang, beispielsweise A₂ (Fig.5) eines der Schalffelder, beispielsweise 2, fort. In diesem Abgang ist in platzsparender Weise ein mit dem Leiter des Rohrgasleitungsabschnitts, beispielsweise der Stromverbindungen L₂₃(R)', galvanisch verbundener Knoten-Erdungsschalter ESₖ angeordnet.

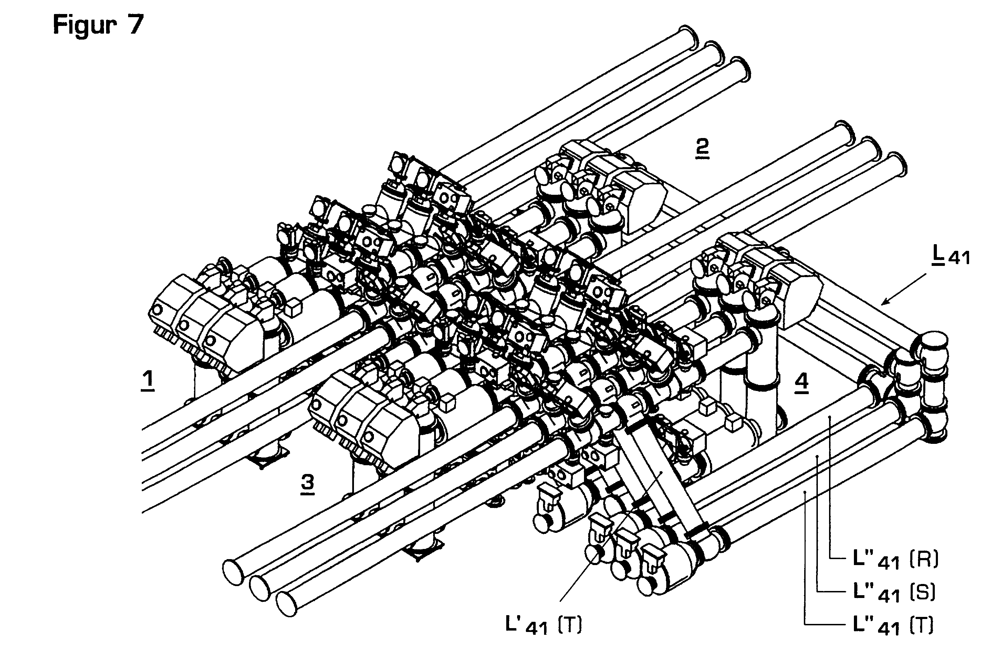

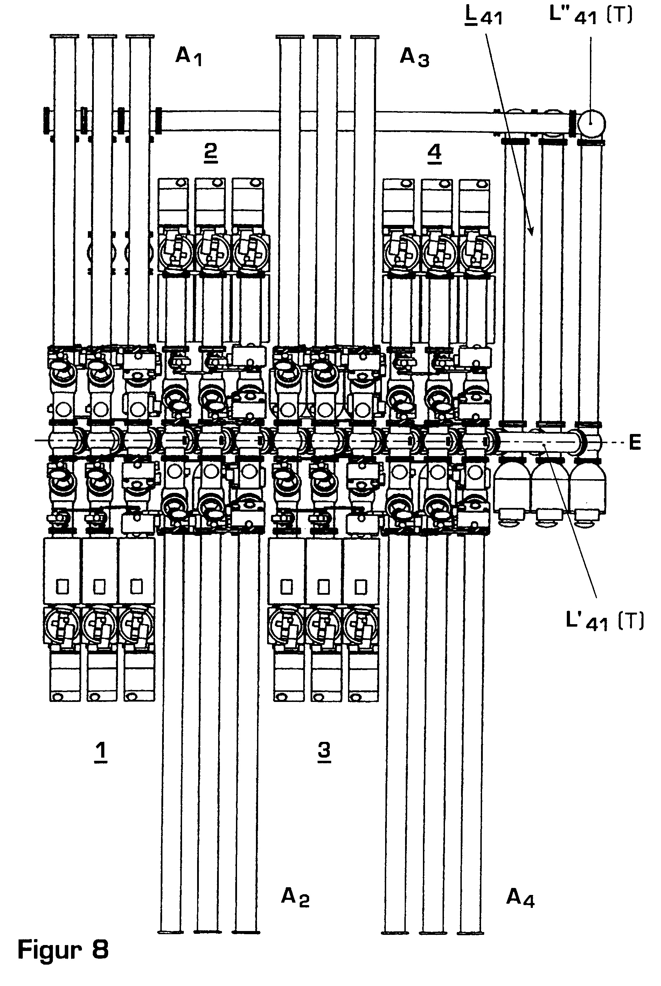

In Unterschied zur Ausführungsform der Schaltanlage nach den Figuren 2 bis 4 weisen bei der Schaltanlage nach den Figuren 7 und 8 die drei geneigt angeordneten Abschnitte L₄₁'(R), L₄₁'(S), L₄₁'(T) gleiche Länge auf. Ersichtlich sind dann die horizontal geführten Abschnitte L₄₁"(R), L₄₁"(S), L₄₁"(T) der einzelnen Phasen zumindest abschnittsweise horizontal nebeneinander angeordnet. Da alle geneigt angeordneten Abschnitte gleichlang sind, ist diese Anlage fertigungstechnisch besonders begünstigt.

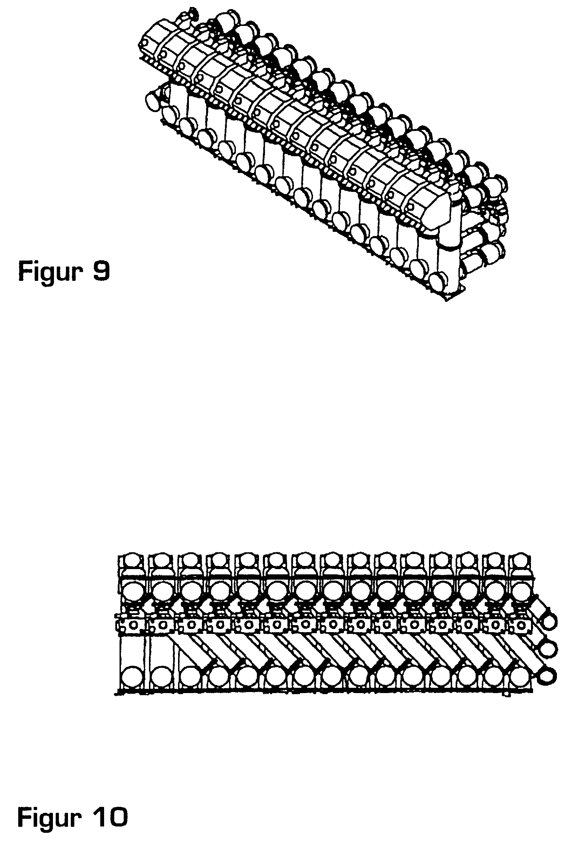

Sind die Abgänge lediglich in einer Richtung von der Schaltanlage weggeführt, so können die Schalffelder gleichartig ausgerichtet sein. Eine solche Anlage ist in den Figuren 9 und 10 dargestellt. Auf der Frontseite einer solchen Anlage sind dann nur noch die Leistungsschalter und auf der Rückseitseite die Stromverbindungen Lᵢⱼ(K) zu erkennen.

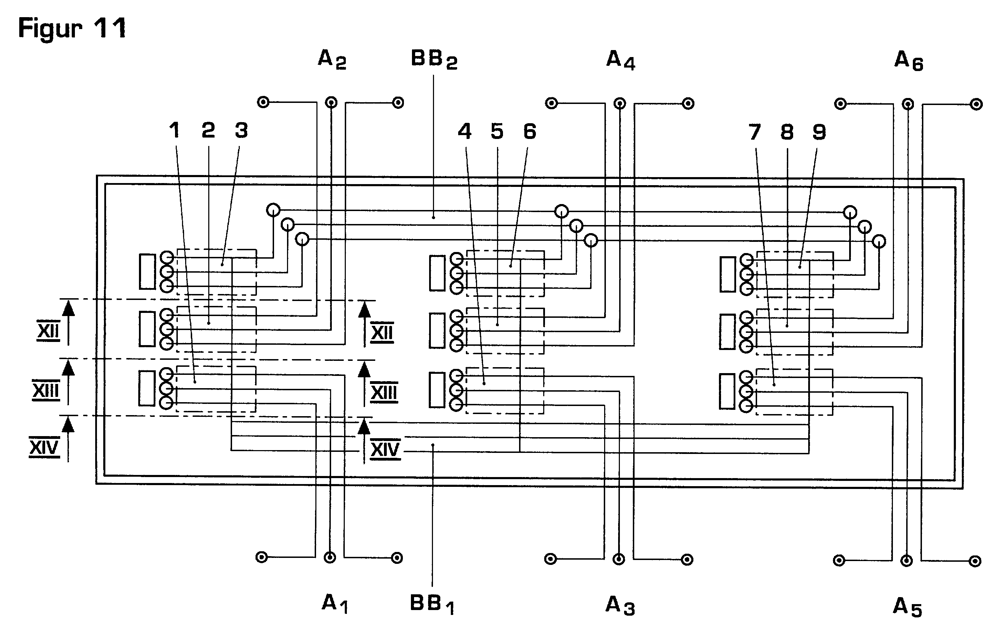

Bei der Ausführungsform der Schaltanlage nach den Figuren 11 bis 14 sind zwischen zwei Sammelschienen BB₁ und BB₂ je drei Gruppen von jeweils drei in Reihe liegenden Schalffeldern 1 bis 9 geschaltet. Jedes Schalffeld enthält entsprechend den beiden zuvor beschriebenen Ausführungsformen der erfindungsgemässen Schaltanlage einen mehrpoligen Leistungsschalter sowie pro Schalterpol Trenn- und Erdungsschalter. Je drei Schalffeldern bzw. Leistungsschaltern sind zwei von sechs Abgängen A₁ bis A₆ zugeordnet, z.B. den Feldern 1 bis 3 die Abgänge A₁ und A₂. Die Anlage ist daher als 1 1/2 - Leistungsschalter - Schaltung ausgeführt. Auch bei dieser Anlage wird erheblich Platz eingespart, da die drei Gruppen von Schalffeldern 1 bis 3, 4 bis 6 und 7 bis 9 jeweils äusserst kompakt aufgebaut sind. Dieser kompakte Aufbau wird wie bei der als Ring geschalteten Anlage durch folgende Massnahmen erreicht: Die Schalterpole CB_{iK}, wobei i = 1, 2, 3,.....,9 und K = R, S, T, der Leistungsschalter Cbₗ, sind jeweils gleichartig ausgebildet und parallel zueinander angeordnet. Die Schalffelder 1 bis 9 sind pro Phase in einer vertikalen Ebene angeordnet und weisen jeweils einen U-förmig ausgebildeten Strompfad auf, bei dem die Basis B des U einen vertikal ausgerichteten Pol CB_{iK} des Leistungsschalters enthält und die beiden Schenkel Sₒ und Sᵤ des U jeweils einen Stromanschluss des Schalterpols und einen Trenn- DS sowie einen Erdungsschalter ES enthalten. Die oberen Schenkel Sₒ der U eines der drei Schalffelder, z.B. 2, sind phasenweise verbunden mit den unteren Schenkeln Sᵤ der U eines anderen der drei Schalffelder, z.B. 3, jeweils mittels eines gegenüber der Vertikalen geneigt angeordneten, geradlinig ausgeführten Abschnitts Lᵢⱼ(R) einer einphasigen Rohrgasleitung.

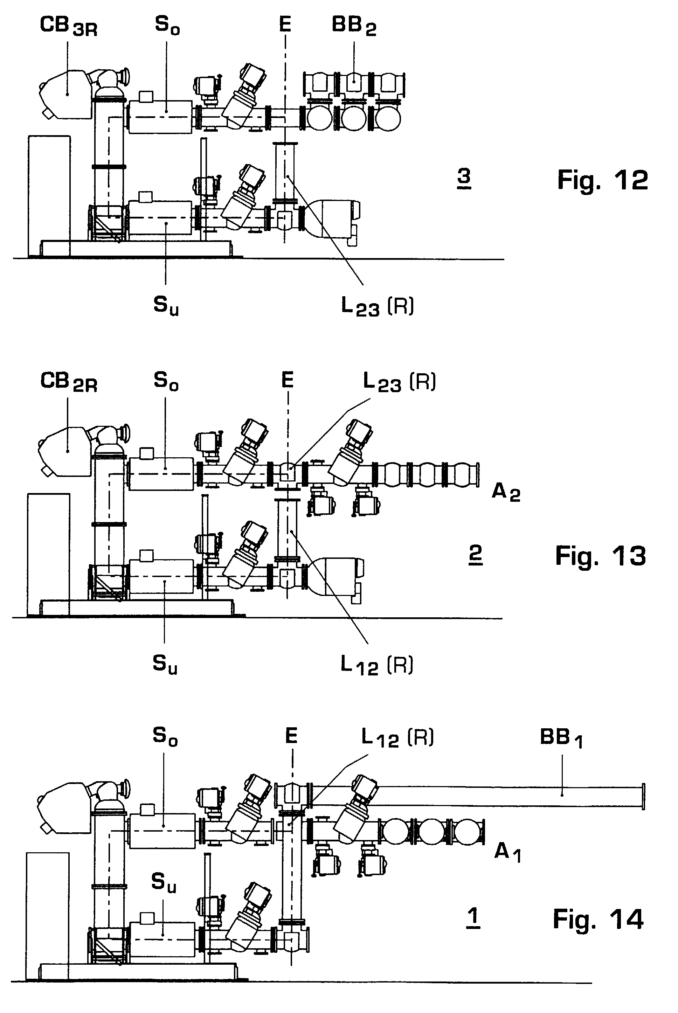

Solche geneigt angeordneten Stromverbindungen sind die in den Figuren 12 bis 14 angegebene Rohrgasleitung L₂₃(R), welche den oberen Schenkel Sₒ des den Schalterpol CB_{2R} enthaltenden Strompfades mit dem unteren Schenkel Sᵤ des den Schalterpol CB_{3R} enthaltenden Strompfades verbindet, und L₁₂(R), welche den unteren Schenkel Sᵤ des den Schalterpol CB_{2R} enthaltenden Strompfades mit dem oberen Schenkel Sₒ des den Schalterpol CB_{1R} enthaltenden Strompfades verbindet.

Die oberen Schenkel der U des Schalffeldes 3 (Fig.12) sind jeweils mit einer Phase der Sammelschiene BB₂ und die unteren Schenkel der U Schalffeldes 1 (Fig.14) sind jeweils mit einer Phase der Sammelschiene BB₁ verbunden.

### BEZUGSZEICHENLISTE

- 1, 2,....., 9: Schalffelder
- A₁, A₂, ..., A₆: Abgänge
- E: Ebene
- Cbᵢ, i = 1, 2,.., 9: Leistungsschalter
- CB_{iK}, i = 1, 2, ..,9; K = R, S, T: Schalterpole
- DS: Trennschalter
- ES: Erdungsschalter
- ESₖ: Knoten-Erdungsschalter
- CT: Stromwandler
- VT: Spannungswandler
- BB₁, BB₂: Sammelschienen
- Lᵢⱼ, i, j = 1, 2,...., 4: Stromverbindungen
- Lᵢⱼ(K)', Lᵢⱼ(K)", i, j = 1, 2, 3, 4; K = R, S, T: Abschnitte von Lᵢⱼ
- B: Basis eines U
- Sₒ, Sᵤ: Schenkel des U

## Patentansprüche

1. Gasisolierte metallgekapselte Schaltanlage mit mindestens zwei jeweils einen mehrpoligen Leistungsschalter (Cbᵢ, i = 1, 2, 3, 4) sowie pro Schalterpol (CB_{iK}, i = 1, 2, 3, 4; K = R, S, T) Trenn- (DS) und Erdungsschalter (ES) enthaltenden Schalffeldern (1, 2, 3, 4), welche nach Art eines Ringes zusammengeschaltet sind, dadurch gekennzeichnet, dass die Schalterpole der Leistungsschalter jeweils gleichartig ausgebildet und parallel zueinander angeordnet sind, dass die Schalffelder pro Phase in einer vertikalen Ebene angeordnet jeweils einen U-förmig ausgebildeten Strompfad aufweisen, bei dem die Basis (B) des U einen vertikal ausgerichteten Pol des Leistungsschalters enthält und die beiden Schenkel (Sₒ, Sᵤ) des U jeweils einen Stromanschluss des Leistungsschalters und einen Trenn- sowie einen Erdungsschalter enthalten, und dass die oberen Schenkel (Sₒ) der U eines ersten (1) der beiden Schalffelder phasenweise verbunden sind mit den unteren Schenkeln (Sᵤ) des zweiten (2) der beiden Schalffelder jeweils mittels einer gegenüber der Vertikalen geneigt angeordneten, geradlinig ausgeführten einphasigen Rohrgasleitung (Lᵢⱼ(K)), i, j = 1, 2, 3, 4; K = R, S, T).

2. Schaltanlage nach Anspruch 1, dadurch gekennzeichnet, dass das zweite (2) oder mindestens ein weiteres Schalffeld (3, 4) mit dem ersten Schalffeld (1) über eine Rohrgasleitungen (L₄₁) verbunden ist, welche pro Phase neben einem geneigt angeordneten Rohrgasleitungsabschnitt (L₄₁'(K)) einen überwiegend horizontal geführten Abschnitt (L₄₁"(K)) aufweist.

3. Schaltanlage nach Anspruch 2, dadurch gekennzeichnet, dass die horizontal geführten Abschnitte (L₄₁"(K)) der einzelnen Phasen vertikal übereinander angeordnet sind, und dass die geneigt angeordneten Abschnitte (L₄₁'(K)) unterschiedliche Länge aufweisen.

4. Schaltanlage nach Anspruch 2, dadurch gekennzeichnet, dass die horizontal geführten Abschnitte (L₄₁"(K)) der einzelnen Phasen zumindest abschnittsweise horizontal nebeneinander angeordnet sind, und dass die geneigt angeordneten Abschnitte (L₄₁'(K)) gleiche Länge aufweisen.

5. Gasisolierte metallgekapselte Schaltanlage mit mindestens drei jeweils einen mehrpoligen Leistungsschalter (Cbᵢ, i = 1, 2,...,9) sowie pro Schalterpol (CB_{iK}, i = 1, 2,....,9; K = R, S, T) Trenn- und Erdungsschalter enthaltenden Schaltfeldern (1, 2,.....,9), welche zwischen zwei Sammelschienen (BB₁, BB₂) geschaltet sind, dadurch gekennzeichnet, dass die Schalterpole der Leistungsschalter jeweils gleichartig ausgebildet und parallel zueinander angeordnet sind, dass die Schalffelder pro Phase in einer vertikalen Ebene angeordnet jeweils einen U-förmig ausgebildeten Strompfad aufweisen, bei dem die Basis (B) des U einen vertikal ausgerichteten Pol des Leistungsschalters enthält und die beiden Schenkel (Sₒ, Sᵤ) des U jeweils einen Stromanschluss des Leistungsschalters und einen Trenn- (DS) sowie einen Erdungsschalter (ES) enthalten, und dass die oberen Schenkel (Sₒ) der U eines ersten (2) der drei Schalffelder phasenweise verbunden sind mit den unteren Schenkeln (Sᵤ) der U eines zweiten (3) der drei Schalffelder jeweils mittels eines gegenüber der Vertikalen geneigt angeordneten, geradlinig ausgeführten einphasigen Rohrgasleitung (L₂₃(R)).

6. Schaltanlage nach Anspruch 5, dadurch gekennzeichnet, dass die unteren Schenkel (Sᵤ) der U des ersten Schalffelds (2) phasenweise verbunden sind mit den oberen Schenkeln (Sₒ) des U eines dritten (1) der drei Schalffelder jeweils mittels eines gegenüber der Vertikalen geneigt angeordneten, geradlinig ausgeführten Abschnitts einer Rohrgasleitung (L₁₂(R)).

7. Schaltanlage nach Anspruch 6, dadurch gekennzeichnet, dass die oberen Schenkel (S₀) der U des zweiten Schalffeldes (3) jeweils mit einer Phase einer ersten (BB₂) der beiden Sammelschienen und die unteren Schenkel (Sᵤ) der U des dritten Schalffeldes (1) jeweils mit einer Phase einer zweiten (BB₁) der beiden Sammelschienen verbunden sind.

8. Schaltanlage nach einem der Ansprüche 1 bis 7, dadurch gekennzeichnet, dass die geneigt angeordneten Rohrgasleitungen (Lᵢⱼ(K)) in einer senkrecht zu den Schenkeln (Sₒ, Sᵤ) der U geführten Ebene (E) liegen.

9. Schaltanlage nach Anspruch 8, dadurch gekennzeichnet, dass die Neigung ca. 30° bis 60°, vorzugsweise ca. 45°, beträgt.

10. Schaltanlage nach einem der Ansprüche 1 bis 9, dadurch gekennzeichnet, dass die oberen Schenkel (Sₒ) der U des ersten Schalffeldes (i, i = 1 oder 2) jeweils einen Abgang (Aᵢ) enthalten, zwischen dem und dem Trennschalter (DS) das obere Ende des geneigt angeordneten Rohrgasleitungsabschnitts (Lᵢⱼ(R), j = 1, 3)) angeordnet ist.

11. Schaltanlage nach Anspruch 10, dadurch gekennzeichnet, dass im Abgang ein mit dem Leiter des Rohrgasleitungsabschnitts galvanisch verbundener Knoten-Erdungsschalter (ESₖ) angeordnet ist.

12. Schaltanlage nach einem der Ansprüche 8 bis 11, dadurch gekennzeichnet, dass das erste (1) und das zweite Schalffeld (2) zueinander gespiegelt angeordnet sind, wobei die Spiegelebene die die geneigten Rohrgasleitungen enthaltende Ebene (E) ist.

13. Schaltanlage nach einem der Ansprüche 1 bis 12, dadurch gekennzeichnet, dass im oberen (Sₒ) und/oder im unteren Schenkel (Sᵤ) des U zwischen dem Stromanschluss und dem Erdungsschalter (ES) ein Stromwandler (CT) angeordnet ist.
